# EUROPEAN PATENT SPECIFICATION

(11) **EP 4 274 046 B1**
(45) Date of publication and mention of the grant of the patent: **13.11.2024**
(21) Application number: 22171678.0
(22) Date of filing: 04.05.2022
(51) Int. Cl.: H02J 1/08, H02J 7/00, H02J 1/10, B60L 53/67, B60L 53/53, B60L 53/10, B60L 55/00

(54) **DC DISTRIBUTION SYSTEM AND METHOD FOR DISTRIBUTING POWER**
GLEICHSTROMVERTEILUNGSSYSTEM UND VERFAHREN ZUM VERTEILEN VON LEISTUNG
SYSTÈME DE DISTRIBUTION CC ET PROCÉDÉ DE DISTRIBUTION D'ÉNERGIE

(43) Date of publication of application: 08.11.2023
(73) Proprietor: ABB E-mobility B.V., 2629 JG Delft (NL)
(72) Inventor: ROTHMUND, Daniel, 5243 Mülligen (CH); CANALES, Francisco, 5405 Baden-Dättwil (CH)
(74) Representative: Maiwald GmbH

(56) References cited:
- EP-B1- 3 333 005
- WO-A1-2021/130158
- US-A1- 2021 178 918
- DINESH KUMAR ET AL: "DC Microgrid Technology: System Architectures, AC Grid Interfaces, Grounding Schemes, Power Quality, Communication Networks, Applications, and Standardizations Aspects", IEEE ACCESS, vol. 5, 1 January 2017 (2017-01-01), pages 12230 - 12256, XP055585114, DOI: 10.1109/ACCESS.2017.2705914

## Description

### FIELD OF THE INVENTION

The present invention relates to a DC distribution system, a use of DC bus ring structure in a DC distribution system, and a first and a second method for distributing power in a DC distribution system. The DC distribution system may be applied in an electric vehicle charging system.

### BACKGROUND

DC distribution systems have gained significant interest in the recent years due to emerging DC applications such as EV charging and data centers, among others. Such distribution systems use one common DC bus that is typically fed by a single source converter and backed up with a single energy storage system. However, in case of a malfunction of either the source converter or the energy storage system, a reliable operation of the DC distribution system is not possible anymore.

Dinesh Kumar et al: "DC Microgrid Technology: System Architectures, AC Grid Interfaces, Grounding Schemes, Power Quality, Communication Networks, Applications, and Standardizations Aspects", IEEE Access, vol. 5, 1 January 2017 describes a ring bus architecture of a DC microgrid. US 2021/178918 A1 D2 describes an electric vehicle charging system, where electric power may be supplied by one or more conventional power sources, such as a utility grid, an energy storage or renewable sources. Electric power from a power source is then converted using a first electric converter and supplied to a ring bus, or conductive ring. EP 3 333 005 B1 describes a power electronics system for charging at least one electrically operated vehicle, wherein the power electronics system has at least three modules each having at least one terminal pair with DC output, at least one rectifier; at least one AC input, at least one DC link and a number of switching elements, in which the respective DC outputs of the at least three modules can be connected selectively by means of the switching elements.

The following abbreviations are used in this disclosure:
- AC ...: Alternate Current
- DC ...: Direct Current
- BESS ...: Battery Energy Storage System
- EV ...: Electric Vehicle
- LV ...: Low-Voltage (typically 200 V - 1 kV)
- MV ...: Medium-Voltage (typically 1 kV - 30 kV)

### SUMMARY

An objective of the invention may be to provide an improved DC distribution system.

The problem is solved by the subject-matter of the independent claims. Embodiments are provided by the dependent claims, the following description and the accompanying figures.

The described embodiments similarly pertain to the DC distribution system, the use of DC bus ring structure, and the first and a second method for distributing power in a DC distribution system. Synergetic effects may arise from different combinations of the embodiments although they might not be described in detail.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a DC distribution system is provided that comprises a plurality of power consumer clusters each comprising at least one power consumer. The power consumer clusters are arranged as a ring structure with a common LV-DC ring bus. Each power consumer is connected to the LV-DC ring bus. The DC distribution system further comprises a plurality of normal-open ring switches. Each power consumer cluster is separated from its adjacent power consumer clusters by one of the normal-open ring switches. Each power consumer cluster is fed by a MV-DC/DC converter, which in turn is fed by an AC/DC converter connected to a MV-AC grid.

A normal-open switch is a switch that, without taking any measure, is open or off. That is, it normally does not conduct current as long as it is actively closed, e.g. by applying a control voltage.

The term power consumer refers to, for example, a vehicle-charging device such as an EV charging station or charging post, also known as Electric Vehicle Supply Equipment EVSE, although the vehicle charger does not consume the power itself but supplies power to a vehicle. Therefore, the DC distribution system may be a system for an EV charging facility. The power consumer can further be, for example a cluster of servers in a data center. Therefore, the DC distribution system may also be a system for a data center. However, the DC distribution system may also be used in other applications.

The MV-DC/DC converter converts the medium voltage provided by the AC/DC converter into low voltage. Therefore, the voltage of the DC ring bus is a low voltage, which is typically in the range of 200 V - 1 kV.

The normal-open ring switches separate the LV-DC ring bus into sections, wherein each power consumer cluster is associated to one of these sections.

In other words, the formation of clusters is proposed. Clusters may be, for example, server clusters in case of data centers and charging pole clusters in case of EV charging. The clusters are fed from independent source converters and have their individual energy storage systems. Further, a ring structure with normally-off switches that can be closed is proposed to enable a continuation of the operation of a cluster even if its source converter and energy storage has malfunctioned, as described in the following embodiments.

According to an embodiment, each AC/DC converter feeds one or more MV-DC/DC converters over a common MV-DC bus.

The AC/DC converter is connected to the MV-AC grid and converts the MV-AC into MV-DC, which is output to the common MV-DC bus. The voltage at the MV-DC bus is the input for, for example, two DC/DC converters, each of which outputs the converted voltage to one section of the LV-DC ring bus.

According to an embodiment, the DC distribution system comprises a plurality of energy storages, wherein each power consumer cluster comprises at least one of the plurality of energy storages, and wherein each energy storage is connected to the LV-DC ring bus.

An energy storage may be a battery storage, which is also commonly known as Battery Energy Storage System (BESS), or may be photovoltaic and/or fuel cells. The energy storage may be used, for example, to reduce of the grid peak consumption and the MV-AC to LV-DC converter power rating. Different types may be contained in the same system. Furthermore, each cluster may accommodate one or several energy storages.

According to an embodiment, the DC distribution system comprises a plurality of energy storage or consumer switches; wherein each power consumer and each energy storage are connected to the LV-DC ring bus via an energy storage or consumer switches.

Using an energy storage switch for the energy storage and a consumer switch for a consumer, a faulty energy storage or power consumer can be disconnected. Further, for example, a power consumer not in use or under maintenance can be disconnected. The switches are arranged between the LV-DC ring bus and DC/DC converters associated with the power consumers or the energy storage.

According to an embodiment, the DC distribution system comprises a plurality of LV-DC/DC converters, each arranged between an energy storage or consumer switch and the battery or consumer.

These LV-DC/DC converters are the converters mentioned in the explanation of the previous embodiment.

According to an embodiment, the power consumer is a vehicle charging post or a cluster of servers in a data center. However, the types of power consumers in the power consumer clusters are not limited to the mentioned.

According to an embodiment, the DC distribution system further comprises AC/DC converter switches and MV-DC/DC converter switches. Each AC/DC converter is connected via one of the AC/DC converter switches to an MV-AC grid, and each MV-DC/DC converter is connected to the LV-DC ring bus via one of the MV-DC/DC converter switches. The AC/DC converter switches and/or the MV-DC/DC converter switches are self-operated or controlled.

These switches may be used to disconnect a faulty converter from the subsequent stage or from the LV-DC bus. "Self-operated" means that they switch themselves if the switches are, for example, reacting to local overcurrent. "Controlled" means, that a controller may control the switches.

According to an embodiment, the DC distribution system further comprises a controller configured to switch any of the MV-DC/DC converter switches, the energy storage or consumer switches and/or the normal-open ring switches.

According to an embodiment, the controller is configured, in case of a malfunction of a MV-DC/DC converter associated with a power consumer cluster, to open the MV-DC/DC converter switch over which the MV-DC/DC converter is connected to the LV-DC ring bus, and to close a normal-open ring switch that connects the power consumer cluster to a neighboring power consumer cluster.

In other words, the controller disconnects the faulty MV-DC/DC converter from its LV-DC bus ring section by opening the corresponding switch, and connects the neighboring LV-DC bus ring section and thus the two adjacent clusters by closing the normal-open ring switch. The controller may connect one neighboring LV-DC bus ring section or both neighboring LV-DC bus ring sections. This applies also for the following embodiments.

According to an embodiment, the controller is configured, in case of a malfunction of an AC/DC converter to open the AC/DC converter switch and/or the MV-DC/DC converter switches of MV-DC/DC converters fed by the AC/DC converter and over which the MV-DC/DC converters are connected to the LV-DC ring bus, and to close the normal-open ring switches that connect the power consumer clusters associated with the MV-DC/DC converters to the neighboring power consumer clusters.

In other words, the controller disconnects the faulty AC/DC converter and the subsequent DC/DC converter stages from their LV-DC bus ring sections by opening the corresponding switches, and connects the LV-DC bus ring section adjacent to these faulty sections by closing the normal-open ring switch between these sections and the adjacent section. Also the normal-open ring switch between the faulty sections may be closed.

According to an embodiment, the controller is configured, in case of a malfunction of an energy storage of an associated power consumer cluster to open the energy storage switch of the malfunctioning energy storage and to close the LV-DC ring switches to the power consumer clusters neighboring the associated power consumer cluster so that the associated power consumer cluster is supported by the energy storages of the neighboring power consumer clusters.

In other words, the controller disconnects the faulty energy storage from its LV-DC bus ring section by opening the corresponding switch, and connects the LV-DC bus ring section adjacent to these faulty section by closing the normal-open ring switch between the faulty section and the adjacent section.

According to an embodiment, the controller is configured, in case of a malfunction of an energy storage of an associated power consumer cluster to open the energy storage switch of the malfunctioning energy storage and to switch the MV-DC /DC converters having the same common MV-DC bus such that a neighboring energy storage connected to these MV-DC /DC converters provides power over these MV-DC /DC converters and the common MV-DC bus to the associated power consumer cluster that comprises the malfunctioning energy storage. The MV-DC /DC converters may be bi-directional converters

In other words, the controller disconnects the faulty energy storage. Instead of closing the normal-open ring switch between the faulty ring bus section and the neighboring section, the path via the MV-DC/DC converter pair is used, that are linked together by a common MV-DC bus, and which are supplied by the same AC/DC converter.

Further switches may be arranged between the AC/DC converter and the MV-DC/DC converters, i.e. one MV-side switch for each MV DC/DC converter. In case one of the MV-DC/DC converters fails (e.g. to short), this would allow further operation of the AC/DC converter and the other DC/DC converter, which works properly. Furthermore, this would allow maintenance of one MV-DC/DC converter without shutting down the AC/DC and the other DC/DC converter.

According to a further aspect, a use of a DC bus ring structure with power consumer clusters is provided. The power consumer clusters comprise a power consumer and an energy storage in a DC distribution system. The power consumer clusters are separated by switches and each power consumer cluster is fed by an associated MV-DC/DC converter.

An AC/DC converter may feed two or more MV-DC/DC converters over a common MV-DC bus.

According to a further aspect, a method for distributing power in a DC distribution system is provided, wherein the method comprises the following steps. In a first step, a malfunctioning power providing device connected to a section of the LV-DC ring bus is detected. In a second step, the power providing device is disconnected from the section of the LV-DC ring bus. In a third step, a normal-open LV-DC ring bus switch connecting the section of the LV-DC ring bus to a neighboring section of the LV-DC ring bus is closed.

The steps of the method may be performed by the controller of the DC distribution system. A disconnection of switches in case of a malfunction of a converter or an energy storage may be, for example, alternatively performed by a switch itself.

According to an aspect, a further method for distributing power in a DC distribution system is provided, wherein the further method comprises the following steps. In a first step, a malfunctioning energy storage connected to a section of the LV-DC ring bus is detected. In a second step, the energy storage is disconnected from the section of the LV-DC ring bus. In a third step, power of a neighboring energy storage is conducted a MV-DC/DC converter, a common DC bus, and a MV-DC/DC converter, wherein the common DC bus is connected to an MV-AC/DC connector feeding MV-DC/DC converter and the MV-DC/DC converter.

The steps of the further method may be performed by the controller of the DC distribution system.

The controller may comprise circuits without programmable logics or may be or comprise a micro controller, a field programmable gate array (FPGA), an ASIC, a Complex Programmable Logic Devices (CPLD), or any other programmable logic devices known to person skilled in the art.

The controller may perform the steps of the method according to a computer program element that may be part of a computer program, but which can also be an entire program by itself. For example, the computer program element may be used to update an already existing computer program to get to the present invention. The computer program and/or computer program element may be stored on a computer readable medium. The computer readable medium may be seen as a storage medium, such as for example, a USB stick, a CD, a DVD, a data storage device, a hard disk, or any other medium on which a program element as described above can be stored.

These and other features, aspects and advantages of the present invention will become better understood with reference to the accompanying figure and the following description.

### SHORT DESCRIPTION OF THE FIGURES

- Fig. 1: shows a block diagram of a power distribution system.
- Fig. 2: shows a block diagram of a power distribution system with a first fault scenario.
- Fig. 3: shows a block diagram of a power distribution system with a second fault scenario.
- Fig. 4: shows a flow diagram of a first method for distributing power in a DC distribution system.
- Fig. 5: shows a flow diagram of a second method for distributing power in a DC distribution system.

### DETAILED DESCRIPTION OF EMBODIMENTS

Identical or equivalent elements are in principle provided with the same reference signs.

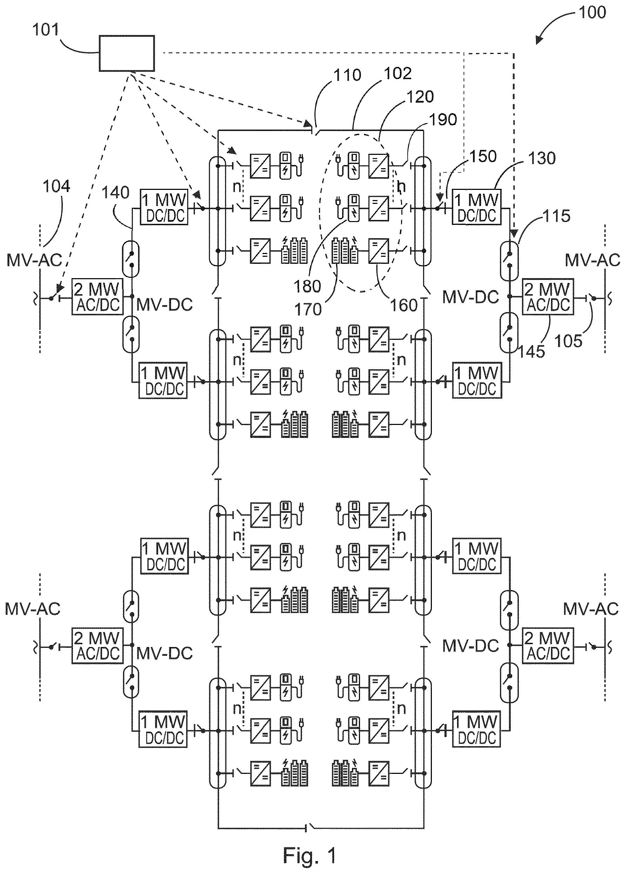

Fig. 1 shows a DC distribution system 100 according to an embodiment. The DC distribution system 100 comprises a plurality of power consumer clusters 120 each comprising a plurality of n power consumers 180. The power consumer clusters 120 further each comprise an energy storage 170 and LV-DC/DC converters 160 for supplying the consumers 180 and the energy storage 170 with power at appropriate voltages and currents. The DC/DC converters 160 for the energy storage are bi-directional such that they can receive power from the common LV-DC ring bus 102 but also provide power over the common LV-DC ring bus 102 to the consumers 180. The DC/DC converters for the consumers can be bidirectional as well in order to allow vehicle-to-grid support. Therefore, also the MV-DC/DC converter 130 and the MV AC/DC converter 145 can be bidirectional. "MW" stands for Megawatt in the figures.

The LV-DC/DC converters 180 for the power consumers 180 and energy storages 170 are each connected via a switch 190 to the DC bus 102. The switches 190 are also referred to as "energy storage or consumer switches" in this disclosure to enable a distinction to other switches in the power distribution system 100. Of course, an energy storage switch 190 refers to a switch that connects a LV-DC/DC converter 160 of an energy storage 170 to the DC bus 102. Correspondingly, a consumer switch 190 refers to a switch that connects a DC/DC converter 160 of a power consumer 180 to the DC bus 102. A power consumer 180, or consumer 180 for short, is, for example, a vehicle charging post or a cluster of servers in a data center, but may further be any other power consumer consuming power at similar magnitudes. An energy storage 170 may be based, for example on a battery that is suitable to deliver power to these power consumers 180. However, also other power delivering devices or systems such as photovoltaic systems or fuel cells may be used additionally or instead. All such devices or systems are understood under the term "energy storage" in this disclosure. The energy storages 170 are useful, for example, for reducing the grid peak consumption and the MV-AC to LV-DC converter power rating.

Each of the power consumers 180 and each of the energy storages 170 are coupled via the energy storage or consumer switches 190 to the LV-DC bus 102, which is arranged as ring bus 102 and therefore referred to in the present disclosure as LV-DC ring bus 102 or as "ring bus" 102 for short. The ring bus 102 is divided into sections separated by switches 110 that are normally open, and therefore herein referred to as normal-open ring switches 110. The devices of one power consumer cluster 120, i.e. power consumers 180 and energy storage 170, are connected to one section of the ring bus 102. Due to the ring structure, every power consumer cluster 120 has two neighboring power consumer clusters.

Each cluster 120 is supplied by a MV-DC/DC converter 130, which again is supplied by an AC/DC converter 145 that is connected to the MV-AC grid. That is, each MV-DC/DC converter 130 is coupled via an MV-DC/DC converter switch to one section of the ring bus 120. The AC/DC converter 145 is coupled over a common MV-DC bus 140 to one, two or more MV-DC/DC converters 130, such that the AC/DC converter 145 supplies one, two or more power consumer clusters. In the common MV-DC bus 140, there are MV-DC bus switches 115 between the AC/DC converters 145 and the MV-DC/DC converters 130. The AC/DC converter 145 may be coupled over a switch 105, herein referred to as AC/DC switch 105 to the MV-AC grid 104.

Although the switches 105, 110, 150, 190 may be realized as manual switches or connectors, the switches are preferably self-operated or controllable switches. The switches may be realized as relays or as transistors or any other electronically switchable devices. The DC distribution system 100 may therefore comprises a controller 101. The controller 101 may also be responsible for controlling the MV-DC/DC converters 130, which may be operated be-directional. The dashed lines in Fig. 1 indicate control lines. The DC distribution system 100 may further comprise failure detection circuits that detect an outage or malfunction of a power supplying device such as the MV-DC/DC converters or the energy storages. Converters or energy storages having outages, defects, malfunctions or which are under maintenance are referred to as malfunctioning or faulty devices for short in this disclosure. In the case of faulty energy storages or faulty power consumers, it is understood that either the power consumer 180 may be faulty or the DC/DC converter 160 connected to the power consumer 180 or energy storage 170. For the definition of "power consumer" it is referred to the explanation above describing the first aspect.

The LV-DC ring 102 is a complete ring. That is, if all normal-open ring switches 110 would be closed, all section of the ring would be galvanically connected to each other. By providing a complete ring, any power consumer cluster 120 and any substructure fed by an AC/DC converter has two neighbors such that in case of faults or malfunctions, the according neighboring power consumer clusters 120 or AC/DC substructures can supply the power consumer clusters 120 or substructures, where a fault or malfunction in a power supplying device occurred.

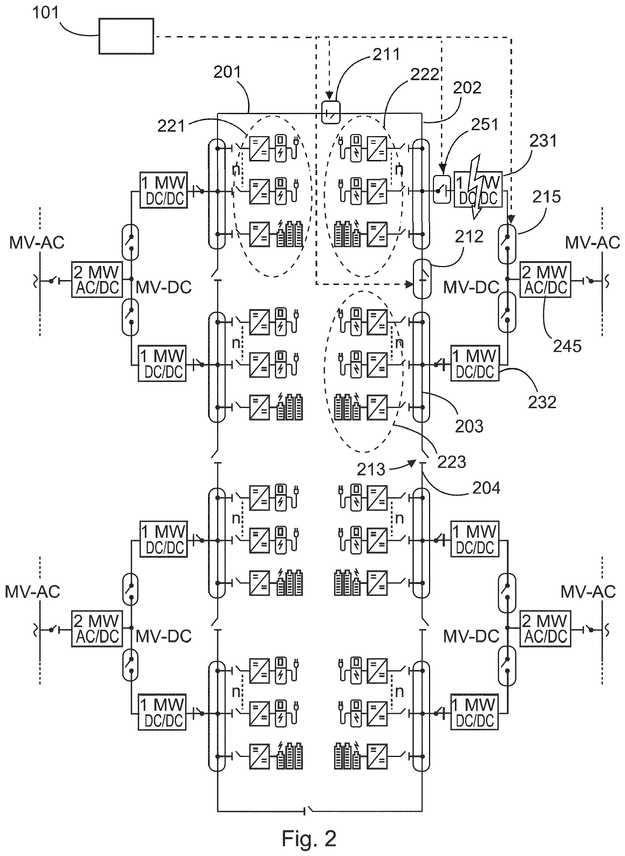

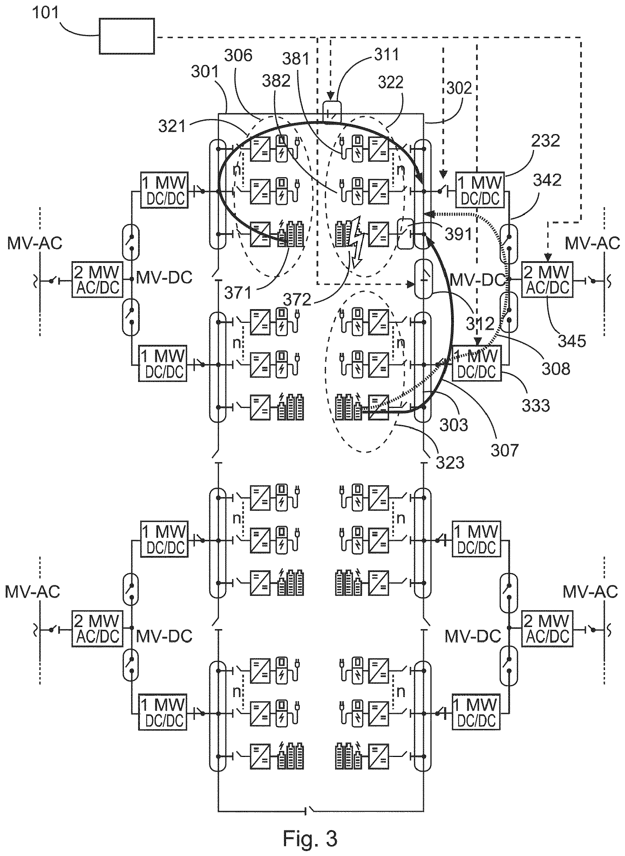

In Fig. 1, the reference signs for the converters, switches, power consumers and clusters are drawn only once representative for all corresponding devices in the DC distribution system. In the following Figures 2 and 3, individual devices are identified by specific reference signs.

Figs. 2 and 3 show examples of malfunctioning devices in the DC distribution systems and how to partially or completely offset the negative effect on the power consumer clusters or power consumers, respectively.

Fig. 2, shows an example, where one MV-DC/DC converter 231 of the MV-DC/DC converters 130 is faulty or malfunctioning. The MV-DC/DC converter 231 supplies the power consumer cluster 222. If this converter 231 is malfunctioning, switch 251 is opened to disconnect the converter 231 from the section 202 of the common LV-DC ring bus 102. Since the power consumer cluster 222 is not provided with power from the MV-DC/DC converter 231 anymore and the energy storage may not be sufficient to replace the outage, switches 211 and 212 are closed such that power is provided from the neighboring ring bus sections 201 and 203. In case that the sections 201 and 203 are already utilized to capacity, the total available power could be shared such each of the power consumer clusters 221, 222, and 223 has a share of 2/3 of the total available power at his disposal.

The switches 211, 212 may be mechanical or electro-mechanical switches or connectors that are switched manually, however, preferably they are controlled by controller 101. The DC distribution system 100 may comprise one or more fault detection circuits (not shown in the figures) that communicate with the controller 101, so that a fully automatic switching is achieved. The DC distribution systems may further comprise means to distribute power between the sections. For example, a section may be prioritized such that only a distinct amount of power is shared with other sections or that power is only shared if a predetermined capacity utilization is not exceeded. For example, section 201 may only be connected to section 202 if the capacity utilization of power of section 201 is below 50%.

In embodiments, only one neighbor may be connected to the section 202 or cluster 222, respectively. In other embodiments, more neighboring sections than the direct neighbor sections 201, 203 may be connected together. The decision for adding more neighbors may be based on priorities or on the actual required power in the single sections.

The principle presented above can also be applied in case of a malfunction of one of the AC/DC converter 245, where ring bus switches 211, 212, and 213 are closed so that power can be provided by sections 201 and 204.

The MV-DC bus switch 218 arranged between the AC/DC converter 245 and the MV-DC/DC converter 231 allow further operation of the AC/DC converter 245 and the other DC/DC converter 232, which works properly, in case MV-DC/DC 231 converter fails (e.g. to short or due to maintenance).

Fig. 3 shows an example, where one energy storage 372 is faulty. The faulty energy storage is part of the power consumer cluster 322 of ring bus section 302, to which consumers 381 and 382 are connectable and which is supplied by MV-DC/DC converter 332, which is again supplied by AC/DC converter 345. Energy storage or consumer switch 391 is open to disconnect the faulty energy storage 372 from the LV-DC ring bus section 302. In order to offset the effect of the outage, there are two principal options.

The first option is similar to the one discussed in Fig. 2. That is, the ring bus switches 311 and 312 are closed such that the neighboring bus ring sections 301 and 303 are galvanically connected to the ring bus section 302 with the faulty energy storage 372 indicated by the paths 306 and 307 in Fig. 3. In this case, energy storages 371 and 373 of the neighboring clusters 321 and 323 are switched to section 302 to replace at least in parts the faulty energy storage 372.

As a second option, path 308 over the MV-DC/DC converter 333, the common MV-DC bus 342 and the MV-DC/DC converter 332 may be chosen for including the energy storage 373 into the power consumer cluster 322. For this, the MV-DC/DC converter 333 may be designed bi-directional. Similarly, the MV-DC/DC converter 332 may be designed bi-directional for supporting a power flow from energy storage 372 to the cluster 323 in case of a malfunction of energy storage 373. In the second option, sections 323 and 322 would still be separate, so that the interactions between the two sections 302, 303 or clusters 322, 323 can be kept low.

In embodiments, a combination of paths 306 and 307, a combination of paths 306 and 308, or one of the paths 306, 307, 308 may be chosen. With respect to the switching, similarly to the case presented in Fig. 2, a controller 101 may be in charge of actuating the switches 311, 312 and/or controlling the MV-DC/DC converter 333. Alternatively, the switches can be operated manually by an operator on site or, for example, via a communication device that includes an appropriate application or any method known to a skilled person.

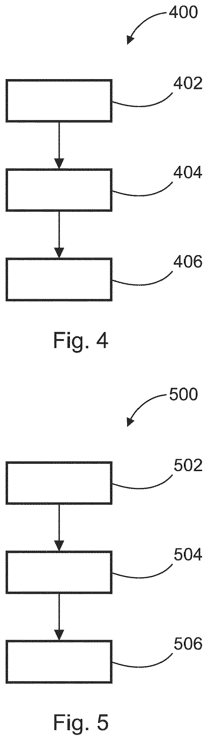

Fig. 4 shows a method 400 for distributing power in a DC distribution system 100 with a LV-DC ring bus 102 separated by normal-open LV-DC ring bus switches 110, such as a system shown in Fig. 1 in combination with the fault case shown in Fig. 2 and/or Fig. 3. The method 400 comprises the following steps: detecting 402 a malfunctioning power providing device 372, 231 connected to a section 202, 302 of the LV-DC ring bus 102; disconnecting 404 the power providing device 372, 231 from the section 202, 302 of the LV-DC ring bus 102; and closing 406 a normal-open LV-DC ring bus switch 211, 311 connecting the section 202, 302 of the LV-DC ring bus to a neighboring section 201, 301 of the LV-DC ring bus 102. The power providing device is, for example, a MV-DC/DC converter 231 or an energy storage 372, but may also be a photovoltaic device or fuel cell. The last step of the method may further comprise closing a further normal-open LV-DC ring bus switch 212, 312 connecting the section 202, 302 of the LV-DC ring bus 102 to a further neighboring section 203, 303 of the LV-DC ring bus.

Fig. 5 shows a method 500 for distributing power in a DC distribution system 100 with a LV-DC ring bus 102 separated by normal-open LV-DC ring bus switches 110, such as a system shown in Fig. 1 in combination with the fault case shown Fig. 3. The method 500 comprises the steps: detecting 502 a malfunctioning energy storage 372 connected to a section 302 of the LV-DC ring bus 102; disconnecting 504 the energy storage 372 from the section 302 of the LV-DC ring bus 102; and conducting 506 power of a neighboring energy storage 373 over a MV-DC/DC converter 333, a common DC bus 342, and a MV-DC/DC converter 332, wherein the common DC bus 342 is connected to an MV-AC/DC converter feeding MV-DC/DC converter 333 and the MV-DC/DC converter 332.

### List of Reference Signs

- 100: DC power distribution system
- 101: controller
- 102: common LV-DC ring bus
- 104: MV-AC grid
- 105: AC/DC switch
- 110: normal-open ring switches
- 115: MV-DC bus switches
- 120: power consumer clusters
- 130: MV-DC/DC converter
- 140: common MV-DC bus
- 145: AC/DC converter
- 150: MV-DC/DC converter switch
- 160: LV-DC/DC converters
- 170: energy storage
- 180: vehicle charger or a vehicle charging station
- 190: energy storage or consumer switch
- 201: first neighboring section of the LV-DC ring bus
- 202: section of the LV-DC ring bus disconnected from faulty MV-DC/DC converter
- 203: second neighboring section of the LV-DC ring bus
- 204: further section of the LV-DC ring bus
- 211: normal-open ring switch to the first neighboring cluster
- 212: normal-open ring switch to the second neighboring cluster
- 213: further normal-open ring switch
- 215: MV-DC bus switch
- 221: first neighboring power consumer cluster
- 222: power consumer cluster disconnected from faulty MV-DC/DC converter
- 223: second neighboring power consumer cluster
- 231: faulty MV-DC/DC converter
- 232: "other" MV-DC/DC converter
- 245: AC/DC converter
- 251: MV-DC/DC converter switch between faulty MV-DC/DC converter and LV-DC ring bus
- 301: first neighboring section of the LV-DC ring bus
- 302: section of the LV-DC ring bus disconnected from faulty energy storage
- 303: second neighboring section of the LV-DC ring bus
- 306: path for power distribution in a fault case
- 307: path for power distribution in a fault case
- 308: path for power distribution in a fault case
- 311: normal-open ring switch to the first neighboring cluster
- 312: normal-open ring switch to the second neighboring cluster
- 321: first neighboring power consumer cluster
- 322: power consumer cluster disconnected from faulty energy storage
- 323: second neighboring power consumer cluster
- 332: MV-DC/DC converter
- 333: MV-DC/DC converter
- 342: common MV-DC bus
- 345: MV-AC/DC converter
- 371: neighboring energy storage
- 372: faulty energy storage
- 373: neighboring energy storage
- 381: power consumer in cluster 322
- 382: power consumer in cluster 322
- 391: energy storage or consumer switch for disconnecting faulty energy storage from LV-DC ring bus

## Claims

1. Direct Current, DC, distribution system (100) comprising
a plurality of power consumer clusters (120) each comprising at least one power consumer (180);
wherein
the power consumer clusters (120) are arranged as a ring structure with a common low voltage, LV, DC ring bus (102);
each power consumer (180) is connected to the LV-DC ring bus (102);
the DC distribution system (100) further comprises a plurality of normal-open ring switches (110);
each power consumer cluster (120) is separated from its adjacent power consumer clusters by one of the normal-open ring switches (110);
**characterized in that**
each power consumer cluster (120) is fed by a medium voltage, MV, DC/DC converter (130), which in turn is fed by a MV-AC/DC converter (145) connected to a MV-AC grid (104), wherein the MV-DC/DC converter is configured to convert the medium voltage provided by the AC/DC converter into low voltage.

2. DC distribution system (100) according to claim 1, wherein each MV-AC/DC converter (145) is configured to feed one or more MV-DC/DC converters (130) over a common MV-DC bus (140).

3. DC distribution system (100) according to claim 1 or 2, wherein the DC distribution system comprises a plurality of energy storages, wherein each power consumer cluster (120) comprises at least one of the plurality of energy storages (170), and wherein each energy storage (170) is connected to the LV-DC ring bus (102).

4. DC distribution system (100) according to claim 3, the DC distribution system (100) comprises a plurality of energy storage or consumer switches (190), wherein each power consumer (180) and each energy storage (170) are connected to the LV-DC ring bus (102) via an energy storage or consumer switch (190).

5. DC distribution system (100) according to claims 3 or 4, wherein the DC distribution system (100) further comprises a plurality of LV-DC/DC converters (160), each arranged between an energy storage or consumer switch (190) and an energy storage (170) or power consumer (180).

6. DC distribution system (100) according to any of the previous claims, wherein the power consumer is a vehicle charging post or a cluster of servers in a data center.

7. DC distribution system (100) according to any of the previous claims, wherein the DC distribution system (100) further comprises self-operated or controlled AC/DC converter switches and self-operated or controlled MV-DC/DC converter switches (150); and wherein
each AC/DC converter (145) is connected via one of the AC/DC converter switches (105) to an MV-AC grid (104); and
each MV-DC/DC converter (130) is connected to the LV-DC ring bus (102) via one of the MV-DC/DC converter switches (150).

8. DC distribution system (100) according to any of the previous claims, wherein the DC distribution system (100) further comprises a controller (101) configured to switch any of the MV-DC/DC converter switches (150), the energy storage or consumer switches (190) and/or the normal-open ring switches (110).

9. DC distribution system (100) according to the previous claim, wherein the controller (101) is configured, in case of a malfunction of a MV-DC/DC converter (231) associated with a power consumer cluster (222), to open the MV-DC/DC converter switch (251) over which the MV-DC/DC converter (231) is connected to the LV-DC ring bus (102), and to close a normal-open ring switch (211, 212) that connects the power consumer cluster (222) to a neighboring power consumer cluster (221, 223).

10. DC distribution system (100) according to claim 8 or 9, wherein the controller (101) is configured, in case of a malfunction of an AC/DC converter (245) to open the AC/DC converter switch (105) and/or the MV-DC/DC converter switches (150) of MV-DC/DC converters (130) fed by the AC/DC converter (245) and over which the MV-DC/DC converters (130) are connected to the LV-DC ring bus (102), and to close normal-open ring switches (110) that connect the power consumer clusters (120) associated with the MV-DC/DC converters (150) to neighboring power consumer clusters.

11. DC distribution system (100) according to any one of claims 8 to 10, wherein the controller (101) is configured, in case of a malfunction of an energy storage of an associated power consumer cluster to open the energy storage switch of the malfunctioning energy storage (372) and to close a LV-DC ring switch (311, 312) to the power consumer cluster (321, 323) neighboring the associated power consumer cluster (322) so that the associated power consumer cluster (322) is supported by the energy storage (371, 373) of the neighboring power consumer cluster (321, 323).

12. DC distribution system (100) according to any one of claims 8 to 11, wherein the controller (101) is configured, in case of a malfunction of an energy storage (372) of an associated power consumer cluster (322) to open the energy storage switch (391) of the malfunctioning energy storage (372) and to switch the MV-DC /DC converters (332, 333) having the same common MV-DC bus (342) such that a neighboring energy storage (373) connected to these MV-DC /DC converters (332, 333) provides power over these MV-DC /DC converters (332, 333) and the common MV-DC bus (342) to the associated power consumer cluster (322) that comprises the malfunctioning energy storage (372).

13. Use of DC bus ring structure (102) with power consumer clusters (120) comprising a power consumer (180) and an energy storage (170) in a DC distribution system (100) according to claim 1, wherein the power consumer clusters (120) are separated by switches (150) and each power consumer cluster (120) is fed by an associated MV-DC/DC converter (130).

14. Method (400) for distributing power in a DC distribution system according to claims 1-8, wherein MV, DC/DC converters (130, 231) and/or energy storages (170, 372) representing power providing devices (130, 231, 170, 372) are connected to sections (202, 302) of the LV-DC ring bus (102); wherein the method comprises the following steps:
detecting (402) a malfunctioning power providing device (372, 231) connected to a section (202, 302) of the LV-DC ring bus (102);
disconnecting (404) the power providing device (372, 231) from the section (202, 302) of the LV-DC ring bus (102); and
closing (406) a normal-open LV-DC ring bus switch (211, 311) connecting the section (202, 302) of the LV-DC ring bus (102) to a neighboring section (201, 301) of the LV-DC ring bus (102).

15. Method (500) for distributing power in a DC distribution system according to claims 1-8, wherein energy storages (170, 372) are connected to sections (202, 302) of the LV-DC ring bus (102); wherein the method comprises the following steps:
detecting (502) a malfunctioning energy storage (372) connected to a section (302) of the LV-DC ring bus (102);
disconnecting (504) the energy storage (372) from the section (302) of the LV-DC ring bus (102); and
conducting (506) power of a neighboring energy storage (373) over a MV-DC/DC converter (333), a common MV-DC bus (342), and a MV-DC/DC converter (332);
wherein the common MV-DC bus (342) is connected to an MV-AC/DC connector feeding MV-DC/DC converter (333) and the MV-DC/DC converter (332).

## Patentansprüche

1. Gleichstrom-, DC-, Verteilungssystem (100), das Folgendes aufweist
eine Vielzahl von Stromverbraucherclustern (120), die jeweils mindestens einen Stromverbraucher (180) aufweisen;
wobei
die Stromverbrauchercluster (120) als Ringstruktur mit einem gemeinsamen Niederspannungs-, LV-, DC-, Ringbus (102) angeordnet sind;
jeder Stromverbraucher (180) mit dem LV-DC-Ringbus (102) verbunden ist;
das DC-Verteilungssystem (100) ferner eine Vielzahl von normal geöffneten Ringschaltern (110) aufweist;
jedes Stromverbrauchercluster (120) von seinen benachbarten Stromverbraucherclustern durch einen der normal geöffneten Ringschalter (110) getrennt ist; **dadurch gekennzeichnet, dass**
jedes Stromverbrauchercluster (120) von einem Mittelspannungs-, MV-, DC/DC-Wandler (130) gespeist wird, der wiederum von einem MV-AC/DC-Wandler (145) gespeist wird, der mit einem MV-AC-Netz (104) verbunden ist, wobei der MV-DC/DC-Wandler eingerichtet ist, die von dem AC/DC-Wandler bereitgestellte Mittelspannung in Niederspannung umzuwandeln.

2. DC-Verteilungssystem (100) nach Anspruch 1, wobei jeder MV-AC/DC-Wandler (145) eingerichtet ist, einen oder mehrere MV-DC/DC-Wandler (130) über einen gemeinsamen MV-DC-Bus (140) zu speisen.

3. DC-Verteilungssystem (100) nach Anspruch 1 oder 2, wobei das DC-Verteilungssystem eine Vielzahl von Energiespeichern aufweist, wobei jeder Stromverbrauchercluster (120) mindestens einen der Vielzahl von Energiespeichern (170) aufweist, und wobei jeder Energiespeicher (170) mit dem LV-DC-Ringbus (102) verbunden ist.

4. DC-Verteilungssystem (100) nach Anspruch 3, wobei das DC-Verteilungssystem (100) eine Vielzahl von Energiespeicher- oder Verbraucherschaltern (190) aufweist, wobei jeder Stromverbraucher (180) und jeder Energiespeicher (170) über einen Energiespeicher- oder Verbraucherschalter (190) mit dem LV-DC-Ringbus (102) verbunden ist.

5. DC-Verteilungssystem (100) nach Anspruch 3 oder 4, wobei das DC-Verteilungssystem (100) ferner eine Vielzahl von LV-DC/DC-Wandlern (160) aufweist, die jeweils zwischen einem Energiespeicher oder Verbraucherschalter (190) und einem Energiespeicher (170) oder Leistungsverbraucher (180) angeordnet sind.

6. DC-Verteilungssystem (100) nach einem der vorhergehenden Ansprüche, wobei der Stromverbraucher eine Fahrzeugladesäule oder ein Cluster von Servern in einem Rechenzentrum ist.

7. DC-Verteilungssystem (100) nach einem der vorhergehenden Ansprüche, wobei das DC-Verteilungssystem (100) ferner selbstbetätigte oder gesteuerte AC/DC-Wandlerschalter und selbstbetätigte oder gesteuerte MV-DC/DC-Wandlerschalter (150) aufweist; und wobei
jeder AC/DC-Wandler (145) über einen der AC/DC-Wandlerschalter (105) mit einem MV-AC-Netz (104) verbunden ist; und
jeder MV-DC/DC-Wandler (130) über einen der MV-DC/DC-Wandlerschalter (150) mit dem LV-DC-Ringbus (102) verbunden ist.

8. DC-Verteilungssystem (100) nach einem der vorhergehenden Ansprüche, wobei das DC-Verteilungssystem (100) ferner eine Steuerung (101) aufweist, die so konfiguriert ist, dass sie einen der MV-DC/DC-Wandlerschalter (150), die Energiespeicher- oder Verbraucherschalter (190) und/oder die normal geöffneten Ringschalter (110) schaltet.

9. DC-Verteilungssystem (100) nach dem vorhergehenden Anspruch, wobei die Steuerung (101) so konfiguriert ist, dass sie im Falle einer Fehlfunktion eines einem Stromverbrauchercluster (222) zugeordneten MV-DC/DC-Wandlers (231) den MV-DC/DC-Wandlerschalter (251), über den der MV-DC/DC-Wandler (231) mit dem LV-DC-Ringbus (102) verbunden ist, öffnet und einen normal geöffneten Ringschalter (211, 212), der das Stromverbrauchercluster (222) mit einem benachbarten Stromverbrauchercluster (221, 223) verbindet, schließt.

10. DC-Verteilungssystem (100) nach Anspruch 8 oder 9, wobei die Steuerung (101) so konfiguriert ist, dass sie im Falle einer Fehlfunktion eines AC/DC-Wandlers (245) den AC/DC-Wandlerschalter (105) und/oder die MV-DC/DC-Wandlerschalter (150) von MV-DC/DC-Wandlern (130), die von dem AC/DC-Wandler (245) gespeist werden und über die die MV-DC/DC-Wandler (130) mit dem LV-DC-Ringbus (102) verbunden sind, öffnet, und zum Schließen von normal geöffneten Ringschaltern (110), die die den MV-DC/DC-Wandlern (150) zugeordneten Stromverbrauchercluster (120) mit benachbarten Stromverbraucherclustern verbinden.

11. DC-Verteilungssystem (100) nach einem der Ansprüche 8 bis 10, wobei die Steuerung (101) so konfiguriert ist, dass sie im Falle einer Fehlfunktion eines Energiespeichers eines zugehörigen Leistungsverbraucher-Clusters den Energiespeicherschalter des fehlerhaften Energiespeichers (372) öffnet und einen LV-DC-Ringschalter (311, 312) zu dem dem zugehörigen Stromverbrauchercluster (322) benachbarten Stromverbrauchercluster (321, 323) zu schließen, so dass das zugehörige Stromverbrauchercluster (322) durch den Energiespeicher (371, 373) des benachbarten Stromverbraucherclusters (321, 323) unterstützt wird.

12. DC-Verteilungssystem (100) nach einem der Ansprüche 8 bis 11, wobei die Steuerung (101) so konfiguriert ist, dass sie im Falle einer Fehlfunktion eines Energiespeichers (372) eines zugehörigen Stromverbraucher-Clusters (322) den Energiespeicherschalter (391) des fehlerhaften Energiespeichers (372) öffnet und die MV-DC/DC-Wandler (332, 333), die denselben gemeinsamen MV-DC-Bus (342) haben, so zu schalten, dass ein benachbarter Energiespeicher (373), der mit diesen MV-DC/DC-Wandlern (332, 333) verbunden ist, Strom über diese MV-DC/DC-Wandler (332, 333) und den gemeinsamen MV-DC-Bus (342) an das zugehörige Stromverbrauchercluster (322) liefert, das den gestörten Energiespeicher (372) aufweist.

13. Verwendung einer DC-Bus-Ringstruktur (102) mit Leistungsverbraucherclustern (120), die einen Leistungsverbraucher (180) und einen Energiespeicher (170) aufweisen, in einem DC-Verteilungssystem (100) nach Anspruch 1, wobei die Leistungsverbrauchercluster (120) durch Schalter (150) getrennt sind und jedes Leistungsverbrauchercluster (120) von einem zugehörigen MV-DC/DC-Wandler (130) versorgt wird.

14. Verfahren (400) zur Energieverteilung in einem DC-Verteilungssystem nach einem der Ansprüche 1 bis 8, wobei an Abschnitte (202, 302) des LV-DC-Ringbusses (102) MV-DC/DC-Wandler (130, 231) und/oder Energiespeicher (170, 372) angeschlossen sind, die Energiebereitstellungsvorrichtungen (130, 231, 170, 372) darstellen; wobei das Verfahren die folgenden Schritte aufweist:
Erkennen (402) einer fehlerhaften Stromversorgungsvorrichtung (372, 231), die mit einem Abschnitt (202, 302) des LV-DC-Ringbusses (102) verbunden ist;
Trennen (404) der Stromversorgungseinrichtung (372, 231) von dem Abschnitt (202, 302) des LV-DC-Ringbusses (102); und
Schließen (406) eines normal geöffneten LV-DC-Ringbus-Schalters (211, 311), der den Abschnitt (202, 302) des LV-DC-Ringbusses (102) mit einem benachbarten Abschnitt (201, 301) des LV-DC-Ringbusses (102) verbindet.

15. Verfahren (500) zur Energieverteilung in einem DC-Verteilungssystem nach einem der Ansprüche 1-8, wobei Energiespeicher (170, 372) an Abschnitte (202, 302) des LV-DC-Ringbusses (102) angeschlossen sind; wobei das Verfahren die folgenden Schritte aufweist:
Erkennen (502) eines fehlerhaft arbeitenden Energiespeichers (372), der mit einem Abschnitt (302) des LV-DC-Ringbusses (102) verbunden ist;
Trennen (504) des Energiespeichers (372) von dem Abschnitt (302) des LV-DC-Ringbusses (102); und
Leiten (506) der Leistung eines benachbarten Energiespeichers (373) über einen MV-DC/DC-Wandler (333), einen gemeinsamen MV-DC-Bus (342) und einen MV-DC/DC-Wandler (332);
wobei der gemeinsame MV-DC-Bus (342) mit einem MV-AC/DC-Verbinder verbunden ist, der den MV-DC/DC-Wandler (333) und den MV-DC/DC-Wandler (332) speist.

## Revendications

1. Système de distribution à courant continu, CC, (100) comprenant
une pluralité de groupes de consommateurs de puissance (120) comprenant chacun au moins un consommateur de puissance (180) ;
dans lequel
les groupes de consommateurs de puissance (120) sont agencés sous forme de structure en anneau avec un bus en anneau CC basse tension, LV, commun (102) ;
chaque consommateur de puissance (180) est connecté au bus en anneau CC LV (102) ;
le système de distribution CC (100) comprend en outre une pluralité de commutateurs à anneau normalement ouverts (110) ;
chaque groupe de consommateurs de puissance (120) est séparé de ses groupes de consommateurs de puissance adjacents par l'un des commutateurs à anneau normalement ouverts (110) ;
**caractérisé en ce que**
chaque groupe de consommateurs de puissance (120) est alimenté par un convertisseur CC/CC moyenne tension, MV, (130), qui à son tour est alimenté par un convertisseur CA/CC MV (145) connecté à un réseau CA MV (104), le convertisseur CC/CC MV étant configuré pour convertir la moyenne tension fournie par le convertisseur CA/CC en basse tension.

2. Système de distribution CC (100) selon la revendication 1, dans lequel chaque convertisseur CA/CC MV (145) est configuré pour alimenter un ou plusieurs convertisseurs CC/CC MV (130) sur un bus CC MV commun (140) .

3. Système de distribution CC (100) selon la revendication 1 ou 2, dans lequel le système de distribution CC comprend une pluralité de stockages d'énergie, chaque groupe de consommateurs de puissance (120) comprenant au moins un de la pluralité de stockages d'énergie (170), et chaque stockage d'énergie (170) étant connecté au bus en anneau CC LV (102).

4. Système de distribution CC (100) selon la revendication 3, le système de distribution CC (100) comprenant une pluralité de commutateurs (190) de stockage d'énergie ou de consommateur, chaque consommateur de puissance (180) et chaque stockage d'énergie (170) étant connecté au bus en anneau CC LV (102) par l'intermédiaire d'un commutateur (190) de stockage d'énergie ou de consommateur.

5. Système de distribution CC (100) selon les revendications 3 ou 4, dans lequel le système de distribution CC (100) comprenant en outre une pluralité de convertisseurs CC/CC LV (160), chacun étant agencé entre un commutateur (190) de stockage d'énergie ou de consommateur et un stockage d'énergie (170) ou consommateur de puissance (180).

6. Système de distribution CC (100) selon l'une quelconque des revendications précédentes, dans lequel le consommateur de puissance est un poste de charge de véhicule ou un groupe de serveurs dans un centre de données.

7. Système de distribution CC (100) selon l'une quelconque des revendications précédentes, dans lequel le système de distribution CC (100) comprend en outre des commutateurs de convertisseur CA/CC auto-actionnés ou commandés et des commutateurs (150) de convertisseur CC/CC MV auto-actionnés ou commandés ; et dans lequel
chaque convertisseur CA/CC (145) est connecté par l'intermédiaire d'un des commutateurs (105) de convertisseur CA/CC à un réseau CA MV (104) ; et
chaque convertisseur CC/CC MV (130) est connecté au bus en anneau CC LV (102) par l'intermédiaire d'un des commutateurs (150) de convertisseur CC/CC LV.

8. Système de distribution CC (100) selon l'une quelconque des revendications précédentes, dans lequel le système de distribution CC (100) comprend en outre un contrôleur (101) configuré pour commuter l'un quelconque des commutateurs de convertisseur CC/CC MV (150), des commutateurs (190) de stockage d'énergie ou de consommateur et/ou des commutateurs à anneau normalement ouverts (110).

9. Système de distribution CC (100) selon la revendication précédente, dans lequel le contrôleur (101) est configuré pour, en cas de dysfonctionnement d'un convertisseur CC/CC MV (231) associé à un groupe de consommateurs de puissance (222), ouvrir le commutateur convertisseur CC/CC MV (251) sur lequel le convertisseur CC/CC MV (231) est connecté au bus en anneau CC LV (102) et fermer un commutateur à anneau normalement ouvert (211, 212) qui connecte le groupe de consommateurs de puissance (222) à un groupe de consommateurs de puissance voisin (221, 223).

10. Système de distribution CC (100) selon la revendication 8 ou 9, dans lequel le contrôleur (101) est configuré pour, en cas de dysfonctionnement d'un convertisseur CA/CC (245), ouvrir le commutateur (105) de convertisseurs CA/CC et/ou les commutateurs (150) de convertisseurs CC/CC MV des convertisseurs CC/CC MV (130) alimentés par le convertisseur CA/CC (245) et sur lesquels les convertisseurs CC/CC MV (130) sont connectés au bus en anneau CC LV (102), et pour fermer des commutateurs à anneau normalement ouverts (110) qui connectent les groupes de consommateurs de puissance (120) associés aux convertisseurs CC/CC MV (150) à des groupes de consommateurs de puissance voisins.

11. Système de distribution CC (100) selon l'une quelconque des revendications 8 à 10, dans lequel le contrôleur (101) est configuré pour, en cas de dysfonctionnement d'un stockage d'énergie d'un groupe de consommateurs de puissance associé, ouvrir le commutateur de stockage d'énergie du stockage d'énergie défectueux (372) et fermer un commutateur à anneau CC LV (311, 312) au groupe de consommateurs de puissance voisin (321, 323) au groupe de consommateurs de puissance associé (322) de sorte que le groupe de consommateurs de puissance associé (322) est supporté par le stockage d'énergie (371, 373) du groupe de consommateurs de puissance voisin (321, 323) .

12. Système de distribution CC (100) selon l'une quelconque des revendications 8 à 11, dans lequel le contrôleur (101) est configuré pour, en cas de dysfonctionnement d'un stockage d'énergie (372) d'un groupe de consommateurs de puissance associé (322), ouvrir le commutateur de stockage d'énergie (391) du stockage d'énergie défectueux (372) et commuter les convertisseurs CC/CC MV (332, 333) ayant le même bus CC MV commun (342) de telle sorte qu'un stockage d'énergie voisin (373) connecté à ces convertisseurs CC/CC MV (332, 333) fournit de la puissance via ces convertisseurs CC/CC MV (332, 333) et le bus CC MV commun (342) au groupe de consommateurs de puissance associé (322) qui comprend le stockage d'énergie défaillant (372).

13. Utilisation d'une structure en anneau de bus CC (102) avec des groupes de consommateurs de puissance (120) comprenant un consommateur de puissance (180) et un stockage d'énergie (170) dans un système de distribution CC (100) selon la revendication 1, dans laquelle les groupes de consommateurs de puissance (120) sont séparés par des commutateurs (150) et chaque groupe de consommateurs de puissance (120) est alimenté par un convertisseur CC/CC MV associé (130).

14. Procédé (400) pour distribuer de la puissance dans un système de distribution CC selon les revendications 1 à 8, dans lequel des convertisseurs CC/CC MV (130, 231) et/ou des stockages d'énergie (170, 372) représentant des dispositifs d'alimentation en puissance (130, 231, 170, 372) sont connectés à des sections (202, 302) du bus en anneau CC LV (102) ; dans lequel le procédé comprend les étapes suivantes :
détection (402) d'un dispositif d'alimentation en puissance défectueux (372, 231) connecté à une section (202, 302) du bus en anneau CC LV (102) ;
déconnexion (404) du dispositif d'alimentation en puissance (372, 231) de la section (202, 302) du bus en anneau CC LV (102) ; et
fermeture (406) d'un commutateur de bus en anneau CC LV normalement ouvert (211, 311) connectant la section (202, 302) du bus en anneau CC LV (102) à une section voisine (201, 301) du bus en anneau CC LV (102).

15. Procédé (500) pour distribuer de la puissance dans un système de distribution CC selon les revendications 1 à 8, dans lequel des stockages d'énergie (170, 372) sont connectés à des sections (202, 302) du bus en anneau CC LV (102) ; dans lequel le procédé comprend les étapes suivantes :
détection (502) d'un stockage d'énergie défectueux (372) connecté à une section (302) du bus en anneau CC LV (102) ;
déconnexion (504) du stockage d'énergie (372) de la section (302) du bus en anneau CC LV (102) ; et
conduction (506) de puissance d'un stockage d'énergie voisin (373) sur un convertisseur CC/CC MV (333), un bus CC MV commun (342) et un convertisseur CC/CC MV (332) ;
le bus CC MV commun (342) étant connecté à un connecteur CA/CC MV alimentant le convertisseur CC/CC MV (333) et le convertisseur CC/CC MV (332).
